# Europäisches Patentamt

# European Patent Office

# Office européen des brevets

(19)

(11) Numéro de publication: **0 166 666**
**B1**

(12) **FASCICULE DE BREVET EUROPÉEN**

(45) Date de publication du fascicule du brevet:
23.08.89

(51) Int. Cl.⁴: **G 01 N 29/04**

(21) Numéro de dépôt: **85420116.7**

(22) Date de dépôt: **24.06.85**

(54) Traducteur à ultrasons polyvalent adaptable aux configurations d'examen.

(30) Priorité: **25.06.84 FR 8410188**

(43) Date de publication de la demande:
**02.01.86 Bulletin 86/1**

(45) Mention de la délivrance du brevet:
**23.08.89 Bulletin 89/34**

(84) Etats contractants désignés:
**AT BE CH DE FR GB IT LI LU NL SE**

(56) Documents cité:
**GB-A-821 131**
**US-A-3 593 570**
**US-A-3 709 029**
**US-A-3 726 131**

(73) Titulaire: **Cence, Mario, 48, route de Givry, F-71100 Stremy (FR)**
Titulaire: **Lecomte, Jean- Claude, 1, Impasse Brocherie, F-38000 Grenoble (FR)**

(72) Inventeur: **Cence, Mario, 48, route de Givry, F-71100 Stremy (FR)**
Inventeur: **Lecomte, Jean- Claude, 1, Impasse Brocherie, F-38000 Grenoble (FR)**

(74) Mandataire: **Ropital- Bonvarlet, Claude, Cabinet BEAU DE LOMENIE 99, Grande rue de la Guillotière, F-69007 Lyon (FR)**

EP 0 166 666 B1

## Description

La présente invention concerne un traducteur pour l'examen non destructif par ultra-sons de matériaux comme ceux constituant, par exemple, des joints soudés de parois de composants sous pression de centrales nucléaires ou analogues, des structures pour exploration ou exploitation des sous-sols, des structures de machines volantes, des éléments ou des pièces de machines tournantes, des liaisons comme celles obtenues, par exemple, par fusion locale, par collage, par placage, par dépôt, des matériaux composites, au moyen d'impulsions ultrasons et en des situations qui peuvent nécessiter des examens répétés comme, par exemple, des examens avant et après traitement thermique, des examens avant et après réparation, des suivis en exploitation de matériaux ou d'assemblage, des suivis d'évolution de défauts, des contrôles industriels de fabrication.

Lors de l'examen par ultra-sons, dans le cas par exemple d'un traducteur en contact avec une surface non plane du matériau à examiner, il est nécessaire, dans la plupart des cas, de changer de traducteur pour l'examen d'une même zone suivant plusieurs sens de sondage étalonnés dans des conditions similaires.

Lors de l'examen par ultra-sons, il est aussi nécessaire de changer de traducteur pour l'examen d'une même zone suivant plusieurs directions des ondes acoustiques par rapport à la normale à la surface de la pièce à examiner (angle de réfraction dans la pièce).

Lors de l'examen par ultra-sons pour la recherche de défauts situés à proximité de la surface de sondage ou lorsque les défauts ont une orientation aléatoire, comme c'est le cas par exemple dans les aciers austénitiques ou les aciers moulés, il est nécessaire, encore, de réaliser l'examen avec plusieurs palpeurs ultrasons ayant des angles de réfraction définis et différents.

Ces trois impératifs obligent à disposer d'un grand nombre de traducteurs de caractéristiques acoustiques, le plus souvent identiques, mais dont l'élément piézo-électrique d'émission est orienté différemment par rapport à la face de contact du traducteur avec la pièce à souder.

Le fait d'utiliser des traducteurs différents pour effectuer, par exemple, des examens répétés à plusieurs sens de sondage dans le cas d'une surface non plane ou à plusieurs angles de réfraction du faisceau ultrasons dans la pièce, avec des traducteurs non repérés, est à l'origine d'un manque de fiabilité et de reproductibilité dans la détection et la caractérisation d'indications.

Le manque de reproductibilité entre des caractéristiques de traducteurs, comme, par exemple, la sensibilité, le spectre de fréquence, l'amortissement, le pouvoir de résolution, l'impédance acoustique, la répartition de la pression acoustique dans le faisceau ultrasonore, est un handicap pour la fiabilité de l'examen non destructif, notamment, lorsque un ou des examens répétés mettent en évidence une ou des indications qui sont à la limite d'un ou de seuils d'acceptation, ou lorsque les caractéristiques d'une ou plusieurs indications sont suivies dans le temps, en vue d'établir l'apparition ou la propagation éventuelle de défauts.

Pour tenter de régler le problème ci-dessus, on a proposé de réaliser des traducteurs comportant un élément piézo-électrique orientable, de façon que la direction du faisceau ultrasonore émis puisse être affectée, par réglage repéré, d'un angle variable par rapport à la surface de contact et de frottement avec la pièce à sonder.

De tels traducteurs, réalisés selon l'enseignement du brevet os 3 593 570 ou du brevet GB 821 131, possèdent un corps ou sabot délimitant un logement, à section droite circulaire, s'ouvrant sur une face latérale du corps et ménagé pour que son axe soit parallèle à une face ou semelle de contact ou frottement, généralement adjacente et perpendiculaire à la face latérale. Le logement est occupé par un noyau portant au moins une pastille ou élément piézo-électrique émetteur-récepteur et dont le plan est parallèle à l'axe du noyau. Des moyens, accessibles à partir de la face latérale, permettent de faire tourner le noyau dans le logement et donc de régler la direction du faisceau ultrasonore émis par rapport à la semelle de frottement.

De tels traducteurs peuvent être considérés comme apportant un réel progrès par rapport à la technique antérieure, sans toutefois être entièrement satisfaisants.

On sait, en effet, que l'utilisation d'une seule pastille piézo-électrique pour l'émission et la réception ne permet pas d'obtenir une information significative de l'état d'une pièce sur une épaisseur de l'ordre de un ou deux millimètres à partir de la surface d'application du traducteur. Ceci est dû au fait qu'il y a réflexion des ultrasons lors du changement de milieu, du couplant à la pièce et, également, des réflexions internes au boîtier, comme mentionné dans les brevets cités. Ces réflexions reviennent à la pastille émettrice et masquent ainsi des réflexions provenant d'éventuelles hétérogénéités de la pièce situées dans les premiers millimètres.

Pour sonder une pièce, il est alors nécessaire de procéder par sondage sur différentes faces, de façon à pouvoir examiner toute l'épaisseur, sans pour autant pouvoir détecter des petits défauts, comme des fissures de fatigue ou de corrosion, situés en surface et ayant quelques dixièmes de millimètres d'extension en profondeur, notamment dans le cas où les épaisseurs sont importantes (100 - 200 mm) ou lorsque l'autre surface est revêtue par un matériau d'une autre nature que celui à contrôler.

Cette façon de procéder n'est pas pratique et représente pour l'opérateur une sujétion analogue à celle découlant de la nécessaire utilisation successive de traducteurs à faisceaux orientés différemment, comme dit précédemment.

Il convient, en outre, de noter que, dans certains cas, cette méthode est inapplicable et qu'alors subsiste une ambiguité sur l'état local d'une pièce qui n'a pas pu être sondée sur l'intégralité de son épaisseur.

La présente invention a pour but de résoudre ce problème en proposant un nouveau traducteur supprimant l'incertitude de sondage en couche sous-jacente à la surface, tout en offrant une possibilité d'orientation angulaire du faisceau ultrasonore émis.

L'objet de l'invention est donc de proposer un nouveau traducteur qui permette de résoudre entièrement le problème de base posé qui est celui de limiter le nombre de traducteurs devant être utilisés, ainsi que le nombre de passes de sondage, l'objectif étant de simplifier la tâche d'un opérateur en réduisant le nombre de ses interventions pour l'examen d'une pièce et de pouvoir réaliser industriellement des examens dans les premiers millimètres de l'épaisseur de matière à examiner.

Pour atteindre le but ci-dessus, le traducteur selon l'invention, du type à ultrasons polyvalent, adaptable aux configurations d'examen et comprenant un boîtier guide d'ondes, de forme générale parallélépipédique, en matière isolante, délimitant, à partir de l'une de ses faces latérales, un logement de section transversale circulaire, contenant un noyau complémentaire, à position angulaire réglable et portant un élément piézo-électrique est caractérisé en ce que:

- le boîtier est constitué par deux masses séparées par une paroi de séparation acoustique, ce boîtier délimitant au moins un logement cylindrique,
- et en ce qu'il comporte deux éléments ou pastilles piézo-électriques associées à au moins un noyau cylindrique et disposées selon une inclinaison relative de part et d'autre du plan de la paroi pour constituer respectivement un émetteur et un récepteur.

Diverses autres caractéristiques ressortent de la description faite ci-dessous en référence aux dessins annexés qui montrent, à titre d'exemples non limitatifs, des formes de réalisation de l'objet de l'invention.

La fig. 1 est une perspective éclatée de l'objet de l'invention.

La fig. 2 est une coupe-élévation de l'objet de l'invention dans son état monté.

La fig. 3 est une vue schématique illustrant une possibilité de l'invention.

La fig. 4 est une coupe-élévation montrant une variante de réalisation de l'un des éléments constitutifs de l'objet de l'invention.

Les fig. 5 et 6 illustrent deux formes d'exécution d'un autre élément de l'invention.

La fig. 7 représente une autre forme de réalisation de l'objet de l'invention.

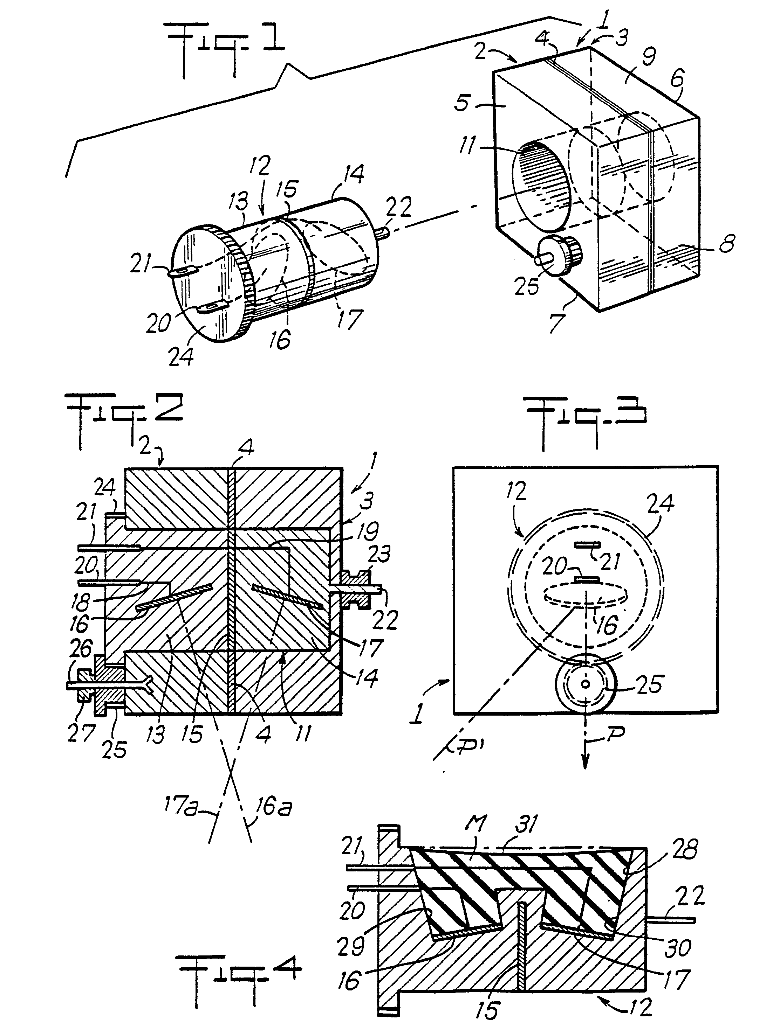

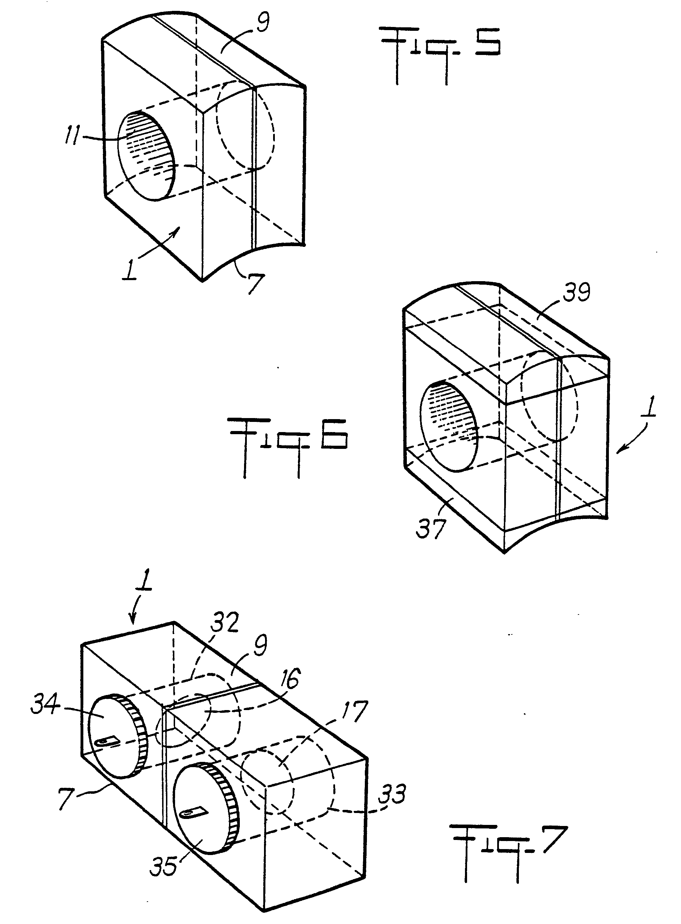

Selon les fig. 1 et 2, le traducteur conforme à l'invention comprend un boîtier 1 guide d'ondes, constitué par deux masses de matière isolante 2 et 3, par exemple en composés acryliques. Les masses 2 et 3 sont séparées par une paroi 4 de séparation acoustique, de préférence réalisée en liège ou constituée par deux feuilles de carton entre lesquelles est placée une feuille métallique, par exemple du plomb. L'assemblage des masses 2, 3 et de la paroi 4 est effectué par collage ou par vissage. Le boîtier 1 est usiné, de manière à se présenter sous la forme générale d'un bloc, par exemple sensiblement parallélépipédique, comprenant alors deux faces latérales 5 et 6 et quatre faces 7 à 10 définissant la périphérie ou le pourtour.

Le boîtier 1 délimite un logement cylindrique 11 pouvant être traversant selon une direction perpendiculaire aux faces 5 et 6 et à la paroi 4. La fig. 2 montre que le logement 11 peut aussi être réalisé à la manière d'un trou borgne à fond plat en étant exécuté, par exemple, à partir de la face 5.

Le traducteur comprend, par ailleurs, une partie active 12 constituée sous la forme d'un noyau cylindrique pouvant être monté dans le logement 11. Les dimensions du noyau 12 sont égales par défaut à celles du logement pour permettre un montage avec un jeu minimal.

Le noyau est constitué par deux masses 13 et 14 cylindriques réalisées en matière isolante et réunies entre elles par une paroi transversale 15 perpendiculaire à l'axe du noyau et assumant une fonction de séparation acoustique, par exemple, en même matière que la paroi 4. Chaque masse porte, incluse en elle-même, une pastille piézo-électrique 16 ou 17 reliée à un conducteur isolé 18 ou 19 traversant le noyau ou encore raccordé à un connecteur propre 20 ou 21 externe ou interne. Les pastilles sont orientées de manière que les deux axes 16a et 17a, perpendiculaires à leurs plans, soient convergents de direction du plan contenant la paroi 15 et se croisent dans ce plan. L'orientation relative de ces pastilles, généralement comprise entre 0 et 15°, correspond à l'angle de toit conféré, ainsi que cela est connu, entre deux pastilles dont l'une est destinée à assumer une fonction d'émission, telle que la pastille 5, et dont l'autre, en l'occurence la 6, assume une fonction de réception. Les pastilles 5 peuvent être planes ou conformées et affecter une forme en plan circulaire, polygonale, etc...

Le noyau est réalisé de manière, qu'après le montage dans le logement 11, la paroi 15 soit située dans le plan de la paroi 4. Le maintien de cette position relative est, par exemple, assuré en prévoyant de munir le noyau d'un tourillon 22 s'étendant axialement à partir de la face opposée à celle pourvue des connecteurs 20 et 21. Le tourillon 22 est destiné à traverser un trou prévu dans le fond du logement borgne 11 extérieurement auquel il coopère avec un organe d'arrêt 23, tel qu'un écrou.

Lorsque le montage est réalisé, comme illustré par la fig. 2, les pastilles 16 émettrice et 17 réceptrice sont séparées relativement par la cloison 4 et 15 et sont ainsi placées dans des conditions optimales de fonctionnement, sans risque de perturbation de leur fonction. La direction du plan P d'émission-réception des pastilles 16 et 17, schématisée à la fig. 3, est, dans cet exemple, orientée perpendiculairement au plan de la face 7 de contact et de frottement sur une pièce à sonder. On conçoit que, par desserrage de l'écrou 23, il est possible de faire tourner le noyau 12 dans le logement 11 et de conférer ainsi au plan P une orientation quelconque par rapport au plan de la face 7, mais aussi par rapport au plan des faces 8, 9 et 10 qui peuvent ainsi être utilisées aussi en tant que surfaces de contact et de frottement. Un exemple est illustré par la direction P' à la fig. 3.

Pour faciliter le réglage de l'orientation du plan P, le noyau 12 comporte, à l'opposé du tourillon 22, un épaulement 24 à périphérie crantée ou dentée, engrenant avec un pignon 25 monté libre de tourner sur un axe 26 saillant de la face 5 du boîtier 1. Un écrou 27 permet de libérer ou d'immobiliser le pignon. Par ce moyen, le noyau 12 est, soit bloqué angulairement de façon précise, soit commandé en rotation sur son axe pour régler l'orientation du plan P.

Le traducteur selon l'invention résoud ainsi le problème général posé aux opérateurs, permettant de réaliser des sondages significatifs intéressant toute l'épaisseur d'une pièce depuis la surface, fournit aux opérateurs des moyens de régler à volonté la direction du plan P selon l'inspection à mener.

Pour faciliter ce réglage, il peut être prévu de faire comporter à l'épaulement un repère se déplaçant devant une règle courbe graduée portée par la face 5.

La fig. 4 montre une variante de réalisation consistant à former le noyau en une seule pièce et à ménager, à partir de la face périphérique, un évidement 28 délimitant deux cavités 29 et 30 à fond plat pour la réception des pastilles 16 et 17. L'évidement est occupé par une masse de remplissage M, choisie en une matière ayant des qualités d'amortissement acoustique, telle qu'en caoutchouc ou mélange de colle associé à une poudre de tungstène.

Il est avantageux de conformer cette masse de remplissage de manière que sa surface extérieure, opposée diamétralement aux faces actives des pastilles 16 et 17, ne s'inscrive pas exactement dans le profil cylindrique du noyau, mais délimite, au contraire, dans cette dernière une légère dépression 31. Ceci a pour avantage de ménager avec la paroi du logement 11 une chambre tournante assurant le piégeage ou la rétention des bulles susceptibles d'être incluses au liquide de couplage acoustique occupant l'interface entre le noyau 12 et le logement 11 et dont la présence peut être la cause de perturbations du faisceau ultrasonore émis ou réfléchi.

Dans le cas de réalisation selon la fig. 4, la paroi 15 peut n'être que partielle et, par exemple, rapportée dans une saignée pratiquée dans le noyau.

La fig. 5 montre une variante de réalisation selon laquelle deux au moins des faces utiles du boîtier 1, telles que les faces 7 et 9, peuvent être réalisées en forme pour correspondre au profil des pièces à sonder. La face 7 peut être, par exemple, concave transversalement et la face 9 convexe.

La fig. 6 montre qu'il est possible de prévoir l'adjonction de cales d'épaisseurs 37 ou 39 sur les faces utiles du boîtier 1 pour les adapter à la conformation de la surface de la pièce à sonder et adapter la distance des éléments ou pastilles piézo-électriques à la zone à examiner. La transmission des ondes ultrasonores entre le boîtier et les cales rapportées est assurée par un liquide approprié de couplage acoustique, disposé à l'interface entre le boîtier et la cale qui peut être maintenu par tous moyens appropriés, par exemple par des vis.

La fig. 7 illustre une autre forme d'exécution selon laquelle le boîtier 1 délimite, dans les masses 2 et 3, deux logements 32 et 33 cylindriques, parallèles entre eux et à la paroi 4, de part et d'autre de laquelle ils sont localisés. Les logements 32 et 33 sont occupés par deux noyaux 34 et 35 contenant, l'un la pastille 16, l'autre la pastille 17, placées pour que le plan de chacune passe par l'axe du noyau. Chaque pastille peut ainsi être réglée en orientation individuelle. Dans un tel cas, le boîtier 1 ne possède plus alors que deux faces utiles, soit les faces 7 et 9 selon les dessins. Cette forme de réalisation permet de décaler le point de convergence des faisceaux d'un côté ou de l'autre du plan contenant la paroi de séparation acoustique 4.

L'invention n'est pas limitée aux exemples divulgués dans les revendications, car diverses modifications peuvent y être apportées sans sortir de son cadre.

**Revendications**

1. Traducteur à ultrasons polyvalent, adaptable aux configurations d'examen, du type comprenant un boîtier guide d'ondes (1), de forme générale parallélépipédique, en matière isolante, délimitant, à partir de l'une de ses faces latérales, un logement (11) de section transversale circulaire, contenant un noyau complémentaire, à position angulaire réglable et portant un élément piézo-électrique,
   caractérisé en ce que:

- le boîtier (1) est constitué par deux masses (2 et 3) séparées par une paroi (4) de séparation acoustique, ce boîtier délimitant au moins un logement cylindrique (11 et 32, 33),
- et en ce qu'il comporte deux éléments ou pastilles piézo-électriques (16, 17) associés à au moins un noyau cylindrique (12 et 34, 35) et disposés selon une inclinaison relative de part et d'autre du plan de la paroi (4) pour constituer respectivement un émetteur et un récepteur.

2. Traducteur selon la revendication 1, caractérisé en ce que:

- le boîtier (1) délimite le logement (11) cylindrique traversant la paroi (4),
- et en ce que le noyau cylindrique (12) occupe le logement (11) incluant les deux pastilles piézoélectriques (16, 17):
  . séparées par une paroi de séparation acoustique située dans le plan de la paroi (4),
  . reliées chacune par un conducteur à un connecteur saillant de l'une des faces transversales du noyau,
  . inclinées relativement, de manière que les perpendiculaires à leurs plans soient convergentes en un point situé dans le plan de la paroi (4).

3. Traducteur selon la revendication 1, caractérisé en ce que:

- le boîtier (1) délimite les deux logements cylindriques (32 et 33) d'axes parallèles entre eux et à la paroi (4) de part et d'autre de laquelle ils sont situés,
- et en ce que les deux noyaux cylindriques (34 et 35) contiennent chacun une pastille piézoélectrique (16, 17) dont le plan passe par l'axe du noyau.

4. Traducteur selon l'une des revendications 1 à 3, caractérisé en ce que chaque pastille est associée à une masse (M) d'amortissement acoustique disposée à l'opposé de sa face active.

5. Traducteur selon l'une des revendications 1 à 4, caractérisé en ce que chaque pastille est associée à une dépression (31) formée dans la partie de la paroi périphérique du noyau opposée à la face active de la pastille et prévue pour délimiter, avec la paroi du logement, une chambre de piégeage et de rétention de bulles de gaz incluses au liquide de couplage acoustique occupant l'interface entre le logement et le noyau.

6. Traducteur selon l'une des revendications 1 à 3, caractérisé en ce que le noyau est associé à des moyens de réglage d'orientation angulaire par rapport au boîtier, constitués par une couronne dentée (24) formée par le noyau et par un pignon denté (25) engrenant avec la couronne et porté par le boîtier.

7. Traducteur selon l'une des revendications 1 à 3, caractérisé en ce que le boîtier est associé à des cales d'épaisseur (37, 39) rapportées sur ses faces de contact et de frottement.

**Patentansprüche**

1. Ultraschallsender, der vielfach an die Testbedingungen anpaßbar ist, mit einem die Form eines Parallelflachs aufweisenden Hohlleitergehäuse (1) aus einem Isoliermaterial, das mittels seiner Seitenflächen den einen kreisförmigen Querschnitt aufweisenden Sitz (11) eines Komplementärkerns begrenzt, dessen Winkelposition einstellbar ist und der ein piezoelektrisches Element trägt,
dadurch gekennzeichnet, daß
das Gehäuse (1) aus zwei durch eine Schalltrennwand (4) getrennten Körpern (2, 3) gebildet wird und wenigstens einen zylindrischen Sitz (11; 32, 33) begrenzt, und
zwei piezoelektrische Elemente oder Plättchen (16, 17) vorgesehen sind, die mit wenigstens einem zylindrischen Kern (12; 34, 35) verbunden und auf beiden Seiten der Ebene der Wand (4) mit einer relativen Neigung angeordnet sind, wodurch ein Sender bzw. ein Empfänger gebildet wird.

2. Sender gemäß Anspruch 1,
dadurch gekennzeichnet, daß
das Gehäuse (1) den die Wand (4) durchsetzenden zylindrischen Sitz (11) begrenzt, und
der zylindrische Kern (12) in dem Sitz (11) angeordnet wird, wobei die zwei im zylindrischen Kern (12) eingeschlossenen piezoelektrischen Plättchen (16, 17) durch eine in der Ebene der Wand (4) liegende Schalltrennwand getrennt sind, jeweils über eine Leitung mit einem aus einer der Stirnseite des Kerns hervorstehenden Stecker verbunden sind und relativ zueinander derart geneigt sind, daß die Normalen der Plättchen sich in einem Punkt in der Ebene der Wand (4) treffen.

3. Sender gemäß Anspruch 1,
dadurch gekennzeichnet, daß
das Gehäuse (1) zwei zylindrische Sitze (32, 33) begrenzt, die beiderseits der Wand (4) mit parallelen Achsen angeordnet sind, und
die zwei zylindrischen Kerne (34, 35) jeweils ein piezoelektrisches Plättchen (16, 17) aufweisen, deren Ebene jeweils durch die Achse des Kerns hindurchgeht.

4. Sender gemäß einem der Ansprüche 1 bis 3,
dadurch gekennzeichnet, daß jedes Plättchen mit einer auf der der aktiven Seite gegenüberliegenden Seite angeordneten Schalldämpfungsmasse (M) verbunden ist.

5. Sender gemäß einem der Ansprüche 1 bis 4,
dadurch gekennzeichnet, daß jedes Plättchen mit einer Vertiefung (31) verbunden ist, die in dem Bereich des Zylindermantels des Kerns, der der aktiven Seite des Plättchens gegenüberliegt, ausgebildet ist, wobei die Vertiefung dazu vorgesehen ist, zusammen mit der Wand des Sitzes eine Kammer zu begrenzen, die als Schleuse dient und Gasbläschen, die in der der Schallkopplung zwischen dem Sitz und dem Kern dienenden Flüssigkeit enthalten sind, zurückhält.

6. Sender gemäß einem der Ansprüche 1 bis 3,
dadurch gekennzeichnet, daß der Kern mit Einstelleinrichtungen für die Winkelorientierung in bezug auf das Gehäuse verbunden ist, die durch einen um den Kern herum ausgebildeten Zahnring (24) und durch ein Ritzel (25) gebildet werden, wobei das Ritzel mit dem Zahnring in Eingriff ist und von dem Gehäuse getragen wird.

7. Sender gemäß einem der Ansprüche 1 bis 3, dadurch gekennzeichnet, daß das Gehäuse mit Unterlegplatten (37, 39) verbunden ist, die an dessen Kontakt- und Reibungsflächen angesetzt sind.

## Claims

1. Multi-purpose ultrasonic transducer which can be adapted to the test configurations, of the type having a wave guide housing (1) which is generally parallelepipedal in shape and, starting from one of its lateral faces, defines a compartment (11) of circular transverse section containing a complementary core which can be regulated in its angular position and bears a piezoelectric element, characterised in that:

- the housing (1) consists of two parts (2 and 3) which are separated by a sound insulating wall (4), this housing defining at least one cylindrical compartment (11 and 32, 33),
- and it has two piezoelectric elements or capsules (16, 17) which are associated with at least one cylindrical core (12 and 34, 34) and are arranged in a relative inclination on either side of the plane of the wall (4) in order to constitute respectively a transmitter and a receiver.

2. Transducer as claimed in claim 1, characterised in that:

- the housing (1) defines the cylindrical compartment (11) passing through the wall (4),
- and the cylindrical core (12) occupies the compartment (11) including the two piezoelectric capsules (16, 17):
  . separated by a sound insulating wall situated in the plane of the wall (4),
  . each linked by a conductor to a connector projecting from one of the transverse faces of the core,
  . inclined relatively in such a way that the perpendiculars to their planes are convergent at a point situated in the plane of the wall (4).

3. Transducer as claimed in claim 1, characterised in that:

- the housing (1) defines two cylindrical compartments (32 and 33) with axes parallel to one another and to the wall (4) on either side of which they are situated,
- and the two cylindrical cores (34 and 35) each contain a piezoelectric capsule (16, 17) the plane of which passes through the axis of the core.

4. Transducer as claimed in one of claims to 3, characterised in that each capsule is associated with a sound proofing part (M) which is arranged opposite its active face.

5. Transducer as claimed in one of claims 1 to 4, characterised in that each capsule is associated with a depression (31) formed in the part of the peripheral wall of the core opposite the active face of the capsule and provided in order to define, with the wall of the compartment, a chamber for trapping and retaining gas bubbles included in the acoustic coupling liquid which occupies the interface between the compartment and the core.

6. Transducer as claimed in one of claims 1 to 3, characterised in that the core is associated with means for regulating the angular orientation with respect to the housing, the said means consisting of a crown wheel (24) formed by the core and a toothed pinion (25) which engages with the crown and is borne by the housing.

7. Transducer as claimed in one of claims 1 to 3, characterised in that the housing is associated with shims (37, 39) provided on the contact and friction surfaces.

Fig.1

Fig.2

Fig.3

Fig.4

Fig. 5

Fig. 6

Fig. 7